# FASCICULE DE BREVET EUROPEEN

(11) **EP 0 864 008 B1**
(45) Date de publication et mention de la délivrance du brevet: **22.03.2000**
(21) Numéro de dépôt: 96939979.9
(22) Date de dépôt: 26.11.1996
(51) Int. Cl.: D04H 18/00

(54) **PROCEDE POUR LA REALISATION DE PREFORMES FIBREUSES DESTINEES A LA FABRICATION DE PIECES ANNULAIRES EN MATERIAU COMPOSITE**
VERFAHREN ZUR HERSTELLUNG VON FASERVORFORMLINGEN ZUR HERSTELLUNG VON RINGFÖRMIGE TEILE AUS EINEM VERBUNDWERKSTOFF
METHOD FOR MAKING FIBROUS PREFORMS FOR PRODUCING ANNULAR PARTS FROM A COMPOSITE MATERIAL

(30) Priorité: 27.11.1995 FR 9514000
(43) Date de publication de la demande: 16.09.1998
(73) Titulaire: SOCIETE NATIONALE D'ETUDE ET DE CONSTRUCTION DE MOTEURS D'AVIATION, "S.N.E.C.M.A.", 75015 Paris (FR); Hexcel Fabrics, 69100 Villeurbanne (FR)
(72) Inventeur: OLRY, Pierre, F-33000 Bordeaux (FR); COUPE, Dominique Parc Sainte-Christine, F-33185 Le Haillan (FR); BOMPARD, Bruno, F-69003 Lyon (FR); AUCAGNE, Jean, F-38110 La-Tour-du-Pin (FR)
(74) Mandataire: Joly, Jean-Jacques
(86) Numéro de dépôt international: FR9601869
(87) Numéro de publication internationale: WO9720092

(56) Documents cités:
- EP-A- 0 528 336
- EP-A- 0 555 134
- FR-A- 2 490 687
- FR-A- 2 643 656
- US-A- 3 952 121

## Description

La présente invention concerne un procédé pour la réalisation de préformes fibreuses destinées à la fabrication de pièces annulaires en matériau composite.

Un domaine particulier, mais non exclusif, d'application de l'invention est la fabrication de disques de frein en matériau composite, notamment des disques de frein en composite carbone-carbone.

Des pièces annulaires en matériau composite, telles que des disques de frein sont constituées d'un renfort fibreux, ou préforme, densifié par une matrice. Pour des disques de frein en composite carbone-carbone, la préforme est en fibres de carbone ou en fibres d'un précurseur du carbone qui est transformé en carbone par traitement thermique après réalisation de la préforme. Un précurseur du carbone disponible sous forme de fibres est notamment le polyacrylonitrile (PAN) préoxydé. La densification de la préforme peut être réalisée par voie liquide - imprégnation par un précurseur liquide du carbone, par exemple une résine, et transformation du précurseur par traitement thermique - , ou par infiltration chimique en phase vapeur.

Un procédé bien connu pour réaliser des préformes fibreuses de pièces en matériau composite consiste à superposer et à aiguilleter des couches ou strates d'une texture fibreuse bidimensionnelle. La texture fibreuse est par exemple un tissu. Le tissu est éventuellement recouvert d'un voile de fibres qui procure les fibres susceptibles d'être déplacées par les aiguilles à travers les strates superposées ; il en est ainsi en particulier lorsque le tissu est en fibres difficilement aiguilletables sans rupture des fils qu'elles constituent, notamment en fibres de carbone. Un tel procédé est décrit notamment dans les documents FR-A-2 584 106 et FR-A-2 584 107 respectivement pour la réalisation de préformes planes et pour la réalisation de préformes de révolution.

Une préforme annulaire pour un disque de frein peut être découpée dans une plaque épaisse formée de couches superposées à plat et aiguilletées. La perte de matière est de près de 50 % ce qui, dans le cas de préformes en fibres de carbone, représente un coût très important en raison du prix de revient du matériau fibreux.

Afin de diminuer cette perte, il a été proposé de réaliser la préforme en superposant et en aiguilletant des couches annulaires formées chacune de plusieurs secteurs assemblés. Les secteurs sont découpés dans une texture bidimensionnelle telle qu'un tissu.

La perte de matière est moindre que dans le cas de la découpe d'anneaux entiers, mais reste non négligeable. En outre, le procédé est assez délicat à mettre en oeuvre et à automatiser, notamment en raison de la nécessité de positionner correctement les secteurs tout en les décalant d'une couche à l'autre afin de ne pas superposer les lignes de séparation entre secteurs.

Il pourrait être envisagé de découper des préformes annulaires dans des manchons réalisés par enroulement sur un mandrin et aiguilletage simultanés d'une bande de tissu, comme décrit dans le document précité FR-A-2 584 107. Le procédé est relativement aisé à mettre en oeuvre, sans perte de matière fibreuse. Toutefois, dans l'application aux disques de freins, et contrairement aux modes de réalisation décrits plus haut, les strates de la préforme sont alors disposées perpendiculairement aux faces frottantes. La moindre résistance au cisaillement parallèlement aux strates peut alors représenter un inconvénient important au niveau d'encoches pratiquées sur le pourtour externe ou interne des disques pour le logement de cavaliers servant à transmettre ou à reprendre les efforts exercés sur les disques.

Une autre technique connue pour la réalisation de préformes fibreuses pour des pièces annulaires en matériau composite consiste à utiliser un produit textile en bande de forme spirale ou hélicoïdale qui est enroulée à plat en spires superposées. Le produit textile peut être un tissu formé de fils de chaîne hélicoïdaux et de fils de trame radiaux.

Comme décrit dans les documents FR-A-2 490 687 et FR-A-2 643 656, la forme spirale ou hélicoïdale est donnée au tissu en appelant au moyen d'un rouleau tronconique des fils de chaîne dévidés de bobines individuelles montées sur un cantre. Dans un tissu ainsi réalisé, l'écartement entre les fils de trame radiaux croît sur la largeur du tissu hélicoïdal entre son diamètre intérieur et son diamètre extérieur. Afin de conserver un caractère homogène au tissu sur toute sa largeur, il est proposé dans les deux documents précités d'introduire des fils de trame supplémentaires qui s'étendent sur une partie seulement de la largeur du tissu, depuis le diamètre extérieur de celui-ci. Cette solution entraîne un surcoût important pour la fabrication du tissu et est source de défauts non négligeables.

Un autre technique décrite dans le document EP-A-0 528 336 consiste à utiliser une tresse tubulaire. En raison de sa déformabilité, la tresse, après avoir été aplatie, peut être bobinée en hélice en formant des spires annulaires superposées qui sont liées entre elles par aiguilletage. Lors de la fabrication de la tresse tubulaire, des éléments unidirectionnels peuvent être introduits parallèlement à l'axe de la tresse. Par une variation appropriée du titre et/ou de l'écartement mutuel des éléments unidirectionnels entre les bords opposés de la tresse aplatie, il est possible d'introduire une compensation à la variation de densité surfacique de la tresse entre ces deux bords qui est causée par la déformation de la tresse lors de son enroulement en hélice à plat. Toutefois, l'introduction des éléments unidirectionnels pénalise la déformabilité de la tresse. De plus, lors de l'enroulement de la tresse en hélice, la longueur décrite par les éléments unidirectionnels varie de façon importante entre la circonférence intérieure et la circonférence extérieure de la préforme annulaire. Il est bien envisagé dans le document EP-A-0 528336, lors de la fabrication de la tresse, d'exercer des tensions plus ou moins grandes sur les éléments unidirectionnels selon qu'ils seront situés à proximité de la circonférence intérieure ou de la circonférence extérieure de la préforme annulaire. Mais outre le fait que cela ne permet qu'une compensation très limitée des différences de longueurs décrites par les éléments unidirectionnels, le maintien de la tension après fabrication de la tresse n'est pas garanti, d'où de possibles retraits et ondulations des éléments unidirectionnels. De plus, l'introduction d'éléments unidirectionnels dans la tresse tubulaire, d'autant si elle doit être réalisée avec des tensions différentes, complique de façon notable l'élaboration de la préforme.

L'invention a pour but de fournir un procédé ne présentant pas les inconvénients des procédés de l'art antérieur, c'est-à-dire un procédé permettant de réaliser des préformes annulaires destinées à la fabrication de pièces en matériau composite, sans perte de matière et à un coût relativement peu élevé, tout en conservant un taux volumique de fibres sensiblement uniforme dans toute la préforme.

Ce but est atteint grâce à un procédé du type comprenant l'enroulement, en couches superposées, d'une bande de tissu de forme spirale ou hélicoïdale comprenant des fils de chaîne sensiblement hélicoïdaux et des fils de trame sensiblement radiaux, procédé selon lequel la masse surfacique de la chaîne du tissu hélicoïdal est croissante entre son diamètre intérieur et son diamètre extérieur et les couches de la bande de tissu sont aiguilletées de manière à être liées entre elles par des fibres tirées de fils du tissu, l'augmentation de la masse surfacique de la chaîne compensant au moins approximativement, pour la densité volumique de la préforme, la diminution de densité de la trame entre le diamètre intérieur et le diamètre extérieur.

Pour la réalisation de pièces annulaires en matériau composite, notamment pour des disques de frein, la déposante a constaté qu'il est surtout important de garantir un taux volumique de fibres sensiblement constant dans tout le volume de la préforme, le taux volumique de fibres étant le pourcentage occupé effectivement par les fibres dans une unité de volume de préforme. En effet, un taux volumique sensiblement uniforme signifie une porosité sensiblement uniforme. La densification de la préforme peut alors être réalisée de façon sensiblement homogène, conférant au matériau composite des caractéristiques sensiblement uniformes dans tout son volume.

Avec le procédé selon l'invention, l'homogénéité de la porosité est obtenue par la combinaison de l'augmentation de la masse surfacique de la chaîne entre le diamètre intérieur et le diamètre extérieur et de l'aiguilletage.

Certes, l'augmentation de la masse surfacique de la chaîne, plutôt que celle de la trame, comme dans l'art antérieur évoqué plus haut, aggrave dans une certaine mesure l'inhomogénéité surfacique du tissu hélicoïdal. Mais, en particulier pour l'application aux disques de frein, cette inhomogénéité surfacique reste tout à fait acceptable lorsque le diamètre intérieur du tissu n'est pas trop petit et la différence entre les diamètres intérieur et extérieur pas trop grande.

De plus, alors que l'augmentation de la masse surfacique de la trame par introduction de fils de trame supplémentaires sur une partie de la largeur du tissu complique la fabrication de celui-ci et en augmente notablement le coût, l'augmentation de la masse surfacique de la chaîne peut être réalisée simplement et sans surcoût, par exemple en utilisant des fils de chaîne de titre croissant et/ou en augmentant la densité des fils de chaîne, entre le diamètre intérieur et le diamètre extérieur du tissu.

Enfin, la fabrication de la texture de base, ici le tissu hélicoïdal, n'est pas compliquée par l'adjonction d'éléments unidirectionnels ou fils supplémentaires.

Le tissu hélicoïdal doit se prêter à l'opération d'aiguilletage sans que les aiguilles aient un effet destructeur sur les fils qui constituent le tissu. Lorsque la préforme doit être réalisée en fibres de carbone ou céramique, il est alors préférable d'utiliser un tissu hélicoïdal au moins partiellement constitué de fils comprenant des fibres discontinues qui peuvent être tirées facilement par les aiguilles. Ces fils peuvent être constitués de fibres de carbone ou de céramique, ou de fibres en un précurseur de carbone ou de céramique, la transformation du précurseur en carbone ou en céramique étant réalisée par traitement thermique réalisé par exemple après aiguilletage.

On utilise avantageusement un tissu hélicoïdal dont les fils, comme décrit dans le document EP-A-0 489 637 sont formés de fibres discontinues parallèles entre elles et non retordues et d'un guipage qui assure l'intégrité du fil. Le guipage est réalisé avec un fil en un matériau fugitif qui est éliminé avant l'aiguilletage. L'élimination du fil de guipage libère les fibres pour l'aiguilletage et évite, du fait du foisonnement des fibres, la présence de macroporosités.

En variante, le fil guipé peut être remplacé par une mèche formée de fibres discontinues parallèles avec une cohésion suffisante pour permettre le tissage sans gêner l'aiguilletage ultérieur. Cette cohésion minimale peut être apportée par une légère torsion, par exemple pas plus de 15 tours par mètre.

L'aiguilletage est réalisé avantageusement avec une densité surfacique de coups d'aiguilles sensiblement constante sur toute la surface des couches de la bande de tissu. On pourra utiliser à cet effet un ensemble d'aiguilles qui couvre un secteur s'étendant sur toute la largeur de la bande de tissu hélicoïdal.

Avantageusement encore, l'aiguilletage est réalisé sur une profondeur sensiblement constante, au fur et à mesure de l'enroulement à plat de la bande de tissu hélicoïdal.

L'enroulement de la bande de tissu peut être réalisé autour d'un axe en formant des couches superposées sensiblement perpendiculaires à cet axe, ou en formant des couches superposées tronconiques. L'axe autour duquel la bande de tissu est enroulée peut être matérialisé par un tube.

D'autres particularités et avantages du procédé conforme à l'invention ressortiront à la lecture de la description faite ci-après, à titre indicatif mais non limitatif, en référence aux dessins annexés sur lesquels :
- la figure 1 est une vue schématique montrant un tissu de forme hélicoïdale utilisable pour la mise en oeuvre d'un procédé conforme à l'invention ;
- la figure 2 illustre schématiquement une variante de réalisation d'un tissu de forme hélicoïdale également utilisable pour la mise en oeuvre d'un procédé conforme à l'invention ;
- la figure 3 montre de façon très schématique, en élévation et en coupe, un premier mode de réalisation d'un dispositif permettant la mise en oeuvre d'un procédé conforme à l'invention ;
- la figure 4 est une vue de dessus en coupe suivant le plan IV-IV de la figure 3 ;
- la figure 5 illustre de façon très schématique, en élévation et en coupe, une variante de réalisation du dispositif illustré par les figures 3 et 4 ;
- la figure 6 est une vue de dessus en coupe suivant la ligne VI-VI de la figure 5 ;
- la figure 7 illustre de façon très schématique, en élévation et en coupe, une autre variante de réalisation du dispositif des figures 3 et 4 ; et
- la figure 8 montre de façon très schématique, en élévation et en coupe, un deuxième mode de mise en oeuvre d'un procédé conforme à l'invention.

Dans ce qui suit, on envisage à titre d'exemple la réalisation de préformes annulaires en fibres de carbone pour la fabrication de disques de frein en matériau composite carbone-carbone.

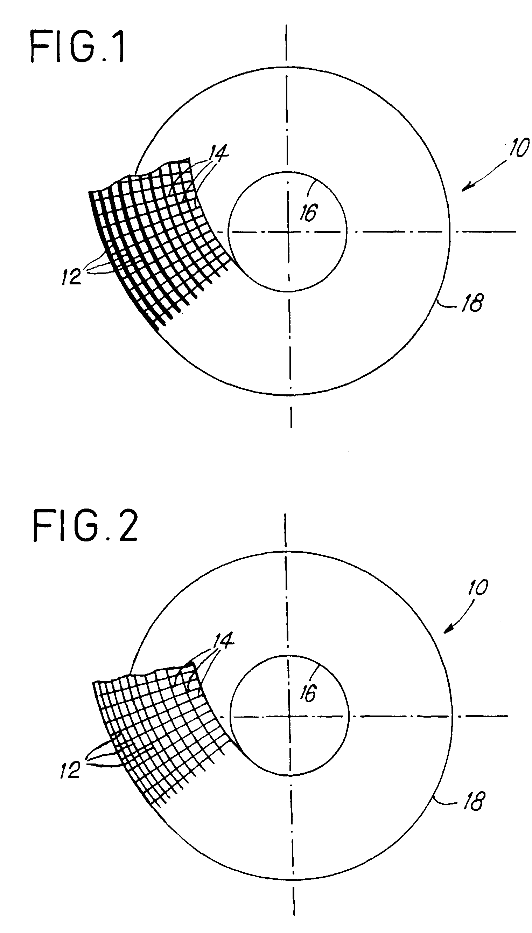

Les préformes sont réalisées par enroulement en couches superposées et aiguilletage d'une bande de tissu 10 de forme hélicoïdale ou spirale par exemple telle qu'illustrée par la figure 1 ou la figure 2.

La bande de tissu hélicoïdal 10 est formée de fils de chaîne hélicoïdaux 12 et de fils de trame radiaux 14. Comme indiqué plus haut et décrit dans les documents déjà cités FR-A-2 490 687 et FR-A-2 643 656, le tissage est réalisé en appelant les fils de chaîne 12 de bobines d'alimentation respectives au moyen d'un rouleau d'appel conique.

Les fils de trame radiaux 14 ont un écartement mutuel qui croît entre le diamètre intérieur 16 et le diamètre extérieur 18 du tissu hélicoïdal. Afin de compenser au moins approximativement cette diminution de masse surfacique de trame, une augmentation sensiblement correspondante de la masse surfacique de chaîne est réalisée.

Dans le mode de réalisation de la figure 1, l'augmentation de masse surfacique de chaîne est obtenue en utilisant des fils de chaîne 14 dont le titre varie en croissant entre le diamètre intérieur 16 et le diamètre extérieur 18 du tissu. Cette variation peut être continue ou par paliers. Dans ce dernier cas, la chaîne est divisée en plusieurs parties dans lesquelles les fils de chaîne 14 ont un même titre, différent de celui qu'ils présentent dans les autres parties de chaîne.

Dans le mode de réalisation de la figure 2, l'augmentation de masse surfacique de chaîne est obtenue en faisant croître la densité des fils de chaîne 14 entre le diamètre intérieur 16 et le diamètre extérieur 18 du tissu, c'est-à-dire en diminuant l'écartement entre fils de chaîne, ceux-ci ayant même titre. La densité peut être modifiée de façon continue ou par paliers, en divisant la chaîne en plusieurs parties contiguës.

Il est bien entendu possible de faire varier à la fois le titre et la densité des fils de chaîne 14.

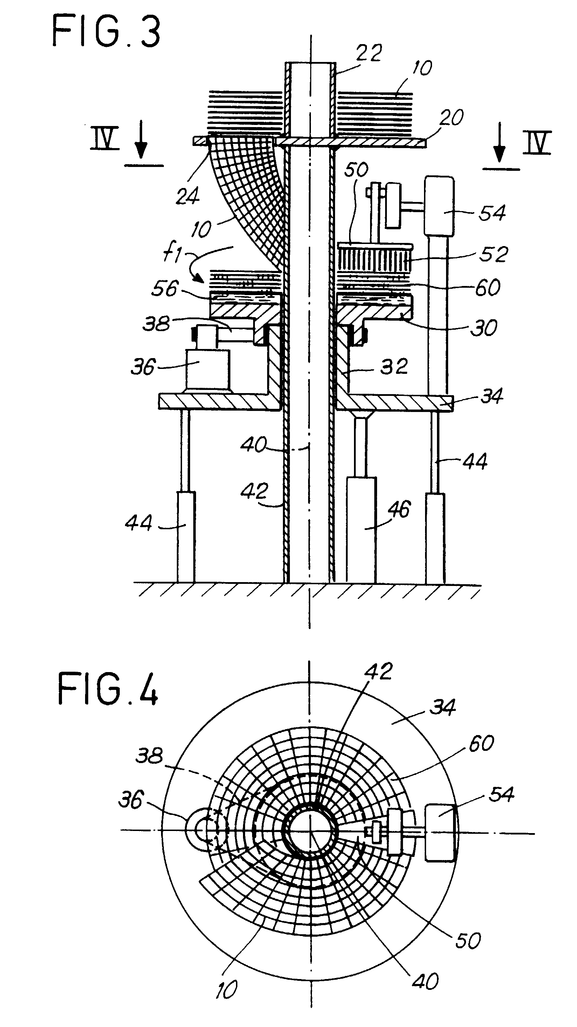

Un premier mode de mise en oeuvre du procédé selon l'invention est illustré par les figures 3 et 4.

Le tissu hélicoïdal 10 est stocké sur un plateau horizontal fixe 20 en étant enroulé en spires superposées à plat autour d'un noyau cylindrique central 22. Le plateau 20 en forme de disque présente une fente radiale 24 d'où la bande de tissu hélicoïdal est tirée vers le bas.

La bande ainsi tirée du plateau de stockage 20 est enroulée en spires superposées à plat sur une platine tournante 30. La platine 30 est montée sur un axe vertical 32 solidaire d'un support 34. Le support 34 porte en outre un moteur 36 qui entraîne la platine 30 en rotation autour de son axe vertical 40 (flèche fl), par l'intermédiaire d'une courroie 38.

L'ensemble comprenant le support 34 et la platine 30 est mobile verticalement le long d'un tube de guidage central fixe 42 d'axe 40. A son extrémité supérieure, le tube 42 supporte le plateau 20. Le support 34, la platine 30 et le plateau 20 sont ainsi coaxiaux. Le support 34 repose sur des tiges télescopiques verticales 44, le déplacement vertical du support 34 étant commandé par un ou plusieurs vérins 46.

Au fur et à mesure de son enroulement à plat sur la platine tournante 30, la bande de tissu hélicoïdal 10 est aiguilletée au moyen d'une planche 50 portant des aiguilles 52 et animée d'un mouvement vertical alternatif. Le mouvement de la planche à aiguilles est commandé par un moteur 54, par l'intermédiaire d'une transmission de type bielle-manivelle. Le moteur 54 est porté par le support 34.

L'aiguilletage de la bande de tissu hélicoïdal 10 est réalisé avec une densité surfacique et une profondeur sensiblement constantes. Pour obtenir une densité de coups d'aiguilles 52 constante sur toute la surface d'une couche annulaire de tissu 10, la planche à aiguille 50 a une forme de secteur, correspondant à un secteur d'une couche annulaire de tissu, secteur sur lequel les aiguilles sont réparties uniformément, tandis que la platine 30 supportant la préforme 60 en cours d'élaboration est entraînée en rotation à vitesse constante.

La profondeur d'aiguilletage, c'est-à-dire la distance sur laquelle les aiguilles 52 pénètrent à chaque fois dans la préforme 60, est maintenue sensiblement constante, et égale par exemple à l'épaisseur formée par quelques couches de tissu superposées. A cet effet, au fur et à mesure du bobinage de la bande de tissu 10 sur la platine 34, celle-ci est déplacée verticalement vers le bas de la distance voulue pour que la position relative entre la surface de la préforme et la planche à aiguilles, à une extrémité de sa course verticale, reste inchangée. A la fin de la réalisation de la préforme 60, après mise en place de la dernière spire de tissu 10, plusieurs passes d'aiguilletage sont réalisées en continuant à faire tourner la platine 30 de manière que la densité volumique d'aiguilletage dans les couches de tissu superficielles soit sensiblement la même que dans le reste de la préforme. Au cours d'une partie au moins de ces passes finales d'aiguilletage, un abaissement progressif de la platine 30 pourra être commandé, comme lors des phases précédentes. Ce principe d'aiguilletage à profondeur constante par abaissement progressif du support de la préforme et avec passes finales d'aiguilletage est connu et décrit notamment dans le document FR-A-2 584 106 déjà cité. En outre, la platine 30 est revêtue d'une couche de protection 56 dans laquelle les aiguilles peuvent pénétrer sans être endommagées lors de l'aiguilletage des premières spires de tissu 10. La couche de protection 56 peut être formée d'un feutre d'embase, par exemple un feutre de polypropylène, recouvert d'une feuille de matière plastique, par exemple en polychlorure de vinyle qui évite, à la remontée des aiguilles, d'entraîner dans la préforme 60, des fibres prélevées dans le feutre d'embase.

Le tissus hélicoïdal 10 doit être apte à subir l'aiguilletage sans que celui-ci endommage les fils constitutifs du tissu de façon trop importante.

Les fils 14, 16 peuvent être formés de fibres carbone ou de fibres de précurseur de carbone, par exemple de fibres de polyacrylonitrile préoxydé, la transformation du précurseur en carbone étant alors réalisée par le traitement thermique de la préforme après aiguilletage.

Avantageusement, les fils 14, 16 sont formés de fibres discontinues, par exemple de fibres discontinues parallèles entre elles et non retordues, l'intégrité étant réalisée par guipage au moyen d'un fil en matière fugitive, comme décrit dans le document EP-A-0 489 637 déjà cité.

Les fibres discontinues parallèles peuvent être obtenues par étirage et craquage contrôlé d'un câble de multifilaments en carbone. Le fil de guipage est en une matière éliminable par la chaleur ou par dissolution, par exemple un alcool polyvinylique soluble dans l'eau. Le guipage assure l'intégrité du fil pendant le tissage. L'élimination du fil de guipage est réalisée sur le tissu hélicoïdal avant aiguilletage, par exemple sur le tissu stocké sur le plateau 20 avant montage de celui-ci sur le tube 42.

En variante, les fils 14, 16 peuvent être formés de mèches de fibres discontinues parallèles dont la cohésion est assurée par une légère torsion suffisante pour permettre le tissage sans gêner l'aiguilletage ultérieur.

Le dispositif qui vient d'être décrit permet de réaliser en continu des préformes de diverses longueurs, la longueur maximale étant déterminée par la course verticale du support 34 le long du tube 42. On notera que le tube 42 sert de guide non seulement à l'ensemble du support 34 et de la platine 30, mais aussi à la préforme 60 en cours d'élaboration. Lorsqu'une préforme 60 a été réalisée, elle est ensuite découpée suivant des plans radiaux pour obtenir des préformes annulaires de disques de frein d'épaisseur voulue, préformes qui sont ensuite densifiées.

L'utilisation d'un tissu hélicoïdal 10 dans lequel la diminution de densité de la trame, entre le diamètre intérieur et le diamètre extérieur, est compensée par l'augmentation de densité de la chaîne permet, après aiguilletage, d'obtenir une préforme dans laquelle le taux de fibres et la porosité sont sensiblement uniformes dans tout le volume de la préforme. En outre, l'utilisation de fils formés de fibres discontinues autorise un foisonnement des fibres qui évite la présence de macroporosités, et, par conséquent, une densification irrégulière.

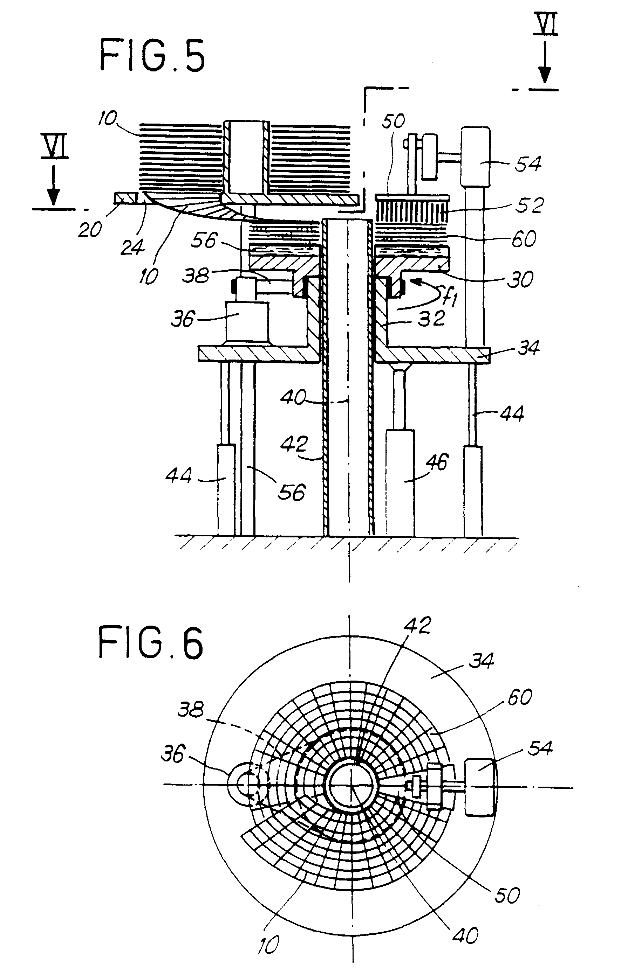

Une variante de réalisation d'un dispositif permettant la mise en oeuvre du procédé selon l'invention est illustrée par les figures 5 et 6, variante qui diffère du mode de réalisation des figures 3 et 4 uniquement par la disposition du support 20 portant le tissu hélicoïdal. Selon cette variante, le support 20 a son axe vertical décalé par rapport à l'axe 40 d'une distance légèrement supérieure à la longueur de la planche à aiguilles 50. De la sorte, le support 20 peut être disposé latéralement par rapport à la planche 50, de façon à réduire au minimum le trajet du tissu 10 entre la fente radiale 24 de sortie du support 20 et la surface supérieure de la préforme 60 en cours d'élaboration. Cette disposition permet en outre une diminution de l'encombrement du dispositif en hauteur. Le support 20 repose alors sur un pied de support particulier 56.

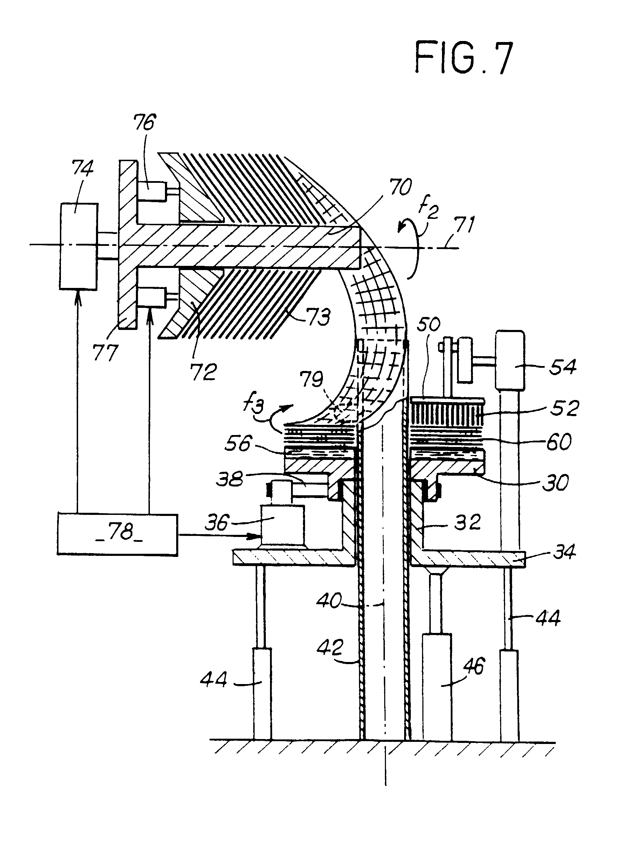

Une autre variante de réalisation de l'alimentation du tissu hélicoïdal est illustrée par la figure 7. La bande de tissu hélicoïdal 10 est enroulée sur un mandrin rotatif horizontal 70 en formant un empilage 73 de strates tronconiques superposées. L'angle des strates avec l'axe 71 du mandrin est par exemple environ égal à 45°. Les strates sont enroulées sur un flasque tronconique 72 qui est mobile en translation parallèlement à l'axe 71 du mandrin.

La rotation du mandrin 70 autour de son axe (flèche f2) est réalisée au moyen d'un moteur 74 tandis que le déplacement en translation du flasque 72 est réalisé au moyen de vérins télescopiques 76 interposés entre le flasque 72 et une embase 77 du mandrin.

La bande de tissu 10 est tirée du mandrin à l'extrémité opposée au flasque 72 pour être enroulée sur la platine tournante 30. L'enroulement de la bande de tissu sur la platine 30 en spires superposées à plat et l'aiguilletage des spires superposées sont réalisés comme décrit en référence aux figures 3 et 4.

Un circuit 78 commande les moteurs 30, 74 et les vérins 76 de sorte que la rotation du mandrin 70 et l'avance de l'empilage 73 des strates tronconiques sur le mandrin soient synchronisées avec la rotation de la platine 30 (flèche f3), afin que la bande de tissu 10 se dépose sur la préforme 60 en cours d'aiguilletage avec une géométrie convenable, sans déformation de la bande de tissu. Un cylindre presseur 79 porté par le support 34 peut être prévu en amont de la planche à aiguilles 50 pour parfaire la présentation de la bande de tissu 10 avant l'aiguilletage.

Dans le cas des figures 3 à 7, le bobinage du tissu hélicoïdal 10 est réalisé en spires annulaires superposées à plat perpendiculairement à l'axe de la préforme.

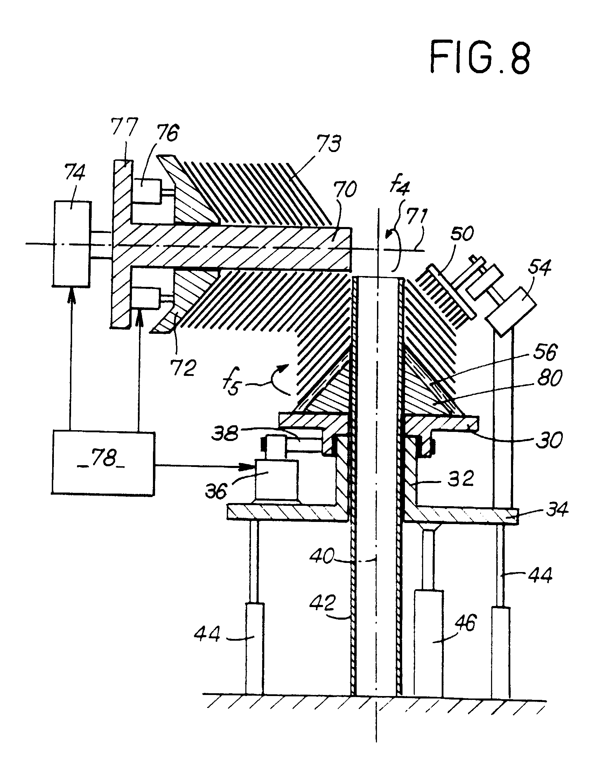

Il est possible de réaliser un bobinage du tissu hélicoïdal 10 en spires tronconiques, par exemple de la façon illustrée par la figure 8.

Le mode de réalisation de la figure 8 diffère de celui de la figure 7 en ce que la platine tournante 30 qui supporte la préforme en cours de formation est munie d'une embase tronconique 80 qui définit la forme des spires constitutives de la préforme 60.

L'angle que forment les spires tronconiques de la préforme 60 avec l'axe 40 est égal à 45°, de même que l'angle que forment les strates tronconiques de la bande de tissu 10 stockée sur le mandrin 70.

La platine 30 et le mandrin 70 sont entraînés en rotation (flèches f5 et f4) avec une même vitesse et l'avance de l'empilage 72 des strates sur le mandrin 70 est asservie à cette vitesse de rotation de sorte que le transfert de la bande de tissu hélicoïdal du mandrin 70 à la platine 30 est réalisé par contact tangentiel entre l'empilage 73 et la préforme 60. Il n'est pas nécessaire de prévoir un galet presseur en amont de la planche à aiguilles 50, comme dans le mode de réalisation de la figure 7.

L'aiguilletage de la bande de tissu 10 sur la platine tournante 30 est réalisé suivant les mêmes principes que ceux décrits en référence aux figures 3 et 4, la planche à aiguilles 50 étant inclinée par rapport à l'horizontale d'un angle de 45° de sorte que la pénétration des aiguilles dans les spires de la préforme 60 est perpendiculaire aux spires. La position de la planche à aiguilles 50 est déterminée pour éviter toute interférence entre les aiguilles et le tube de guidage 42, sauf à munir celui-ci d'un revêtement analogue au feutre d'embase 56 qui recouvre l'embase tronconique 80.

Le bobinage de la préforme 60 en spires tronconiques permet, après découpe de préformes annulaires de disques de frein, d'avoir des faces frottantes non parallèles aux couches de tissu.

Dans ce qui précède, il est envisagé la réalisation de préformes annulaires de disques de freins en composite carbone-carbone. L'invention est applicable à la réalisation de préformes annulaires pour des pièces composites en carbone-carbone ayant d'autres applications, par exemple des roues. Elle est également applicable à la réalisation de préformes annulaires pour des pièces en matériaux composites autres que le carbone-carbone, la nature des fibres des préformes étant choisie en fonction de la matière constitutive souhaitée pour le renfort fibreux des pièces composites.

## Revendications

1. Procédé pour la réalisation de préformes fibreuses destinées à la fabrication de pièces annulaires en matériau composite, procédé comprenant l'enroulement, en couches superposées, d'une bande de tissu de forme spirale ou hélicoïdale comprenant des fils de chaîne sensiblement hélicoïdaux et des fils de trame sensiblement radiaux,
caractérisé en ce que la masse surfacique de la chaîne du tissu hélicoïdal est croissante entre son diamètre intérieur et son diamètre extérieur et les couches de la bande de tissu sont aiguilletées de manière à être liées entre elles par des fibres tirées de fils du tissu, l'augmentation de la masse surfacique de la chaîne compensant au moins approximativement pour la densité volumique de la préforme, la diminution de densité de la trame entre le diamètre intérieur et la diamètre extérieur.

2. Procédé selon la revendication 1, caractérisé en ce que le tissu hélicoïdal (10) est au moins partiellement constitué de fils comprenant des fibres discontinues parallèles.

3. Procédé selon la revendication 2, caractérisé en ce que le tissu hélicoïdal (10) est au moins partiellement constitué de fils comprenant des fibres discontinues parallèles et dont l'intégrité est assurée par un fil de guipage fugitif, et en ce que le fil de guipage est éliminé avant aiguilletage.

4. Procédé selon la revendication 2, caractérisé en ce que le tissu hélicoïdal (10) est au moins partiellement constitué de fils comprenant des fibres discontinues et dont la cohésion est assurée par une légère torsion.

5. Procédé selon l'une quelconque des revendications 1 à 4, caractérisé en ce que le titre des fils de chaîne (12) est croissant entre le diamètre intérieur et le diamètre extérieur.

6. Procédé selon l'une quelconque des revendications 1 à 5, caractérisé en ce que la densité des fils de chaîne (12) est croissante entre le diamètre intérieur et le diamètre extérieur.

7. Procédé selon l'une quelconque des revendications 1 à 6, caractérisé en ce que l'aiguilletage est réalisée avec une densité surfacique de coups d'aiguilles sensiblement constante sur toute la surface des couches de la bande de tissu.

8. Procédé selon l'une quelconque des revendications 1 à 7, caractérisé en ce que l'aiguilletage est réalisé au moyen d'un ensemble d'aiguilles (50) qui couvre un secteur s'étendant sur toute la largeur de la bande de tissu.

9. Procédé selon l'une quelconque des revendications 1 à 8, caractérisé en ce que l'aiguilletage est réalisé sur une profondeur sensiblement constante.

10. Procédé selon l'une quelconque des revendications 1 à 9, caractérisé en ce que l'aiguilletage est réalisé progressivement, au fur et à mesure de l'enroulement à plat de la bande de tissu.

11. Procédé selon l'une quelconque des revendications 1 à 9, caractérisé en ce que la bande de tissu hélicoïdal est enroulée autour d'un axe en formant des couches superposées sensiblement perpendiculaires à cet axe.

12. Procédé selon l'une quelconque des revendications 1 à 10, caractérisé en ce que la bande de tissu est enroulée autour d'un axe en formant des couches superposées tronconiques.

13. Procédé selon l'une quelconques des revendications 1 à 12, caractérisé en ce que la bande de tissu est enroulée autour d'un tube (42).

14. Procédé selon l'une quelconque des revendications 1 à 13, caractérisé en ce que la bande de tissu est stockée sur un plateau (20) d'où elle est tirée à travers une fente radiale (24).

15. Procédé selon l'une quelconque des revendications 1 à 13, caractérisé en ce que la bande de tissu (10) est stockée sur un mandrin (70) où elle est enroulée en formant un empilage (73) de strates tronconiques superposées.

16. Procédé selon la revendication 15, caractérisé en ce que la bande de tissu est prélevée du mandrin (70) au fur et à mesure de son enroulement sur une platine tournante pour former une préforme (60, fig. 8) constituée de spires tronconiques superposées, le transfert de la bande de tissu étant réalisé par contact tangentiel entre l'empilage de strates tronconiques sur le mandrin et la préforme en cours de formation.

17. Procédé selon l'une quelconque des revendications 1 à 16, caractérisé en ce que la bande de tissu (10) est enroulée à plat et est aiguilletée en continu, au fur et à mesure de son enroulement, de manière à former un manchon, et des préformes destinées à la fabrication de pièces annulaires sont découpées dans le manchon.

18. Utilisation d'un procédé selon l'une quelconque des revendications 1 à 17 pour la réalisation de préformes annulaires destinées à la fabrication de disques de frein en matériau composite.

## Patentansprüche

1. Verfahren zur Herstellung von Faser-Vorformlingen, die zur Herstellung von ringförmigen Teilen aus Verbundwerkstoff bestimmt sind, wobei das Verfahren das Winden eines spiralförmigen Gewebebandes in aufeinandergestapelten Lagen aufweist, welches im wesentlichen spiralförmige Kettfäden und im wesentlichen radiale Schußfäden aufweist,
**dadurch gekennzeichnet**,
daß die flächenbezogene Masse der Kette des spiralförmigen Gewebes zwischen seinem Innendurchmesser und seinem Außendurchmesser zunehmend ist und die Lagen des Gewebebandes in der Weise genadelt werden, um untereinander durch Fasern verbunden zu werden, die von Fäden des Gewebes gezogen werden, wobei die Zunahme der flächenbezogenen Masse der Kette wenigstens annähernd für die räumliche Dichte des Vorformlings die Verminderung der Dichte des Schusses zwischen dem Innendurchmesser und dem Außendurchmesser kompensiert.

2. Verfahren nach Anspruch 1,
**dadurch gekennzeichnet**,
daß das spiralförmige Gewebe (10) wenigstens teilweise aus Fäden gebildet ist, welche diskontinuierliche, parallele Fasern aufweist.

3. Verfahren nach Anspruch 2,
**dadurch gekennzeichnet**,
daß das spiralförmige Gewebe (10) wenigstens teilweise aus Fäden gebildet ist, welche diskontinuierliche, parallele Fasern aufweisen und deren Integrität durch einen flüchtigen Umwicklungsfaden gewährleistet wird, und daß der Umwicklungsfaden vor der Nadelung beseitigt wird.

4. Verfahren nach Anspruch 2,
**dadurch gekennzeichnet**,
daß das spiralförmige Gewebe (10) wenigstens teilweise aus Fäden gebildet ist, welche diskontinuierliche Fasern aufweisen und deren Zusammenhalt durch eine leichte Drehung gewährleistet wird.

5. Verfahren nach einem der Ansprüche 1 bis 4,
**dadurch gekennzeichnet**,
daß der Titer der Kettfäden (12) zwischen dem Innendurchmesser und dem Außendurchmesser zunehmend ist.

6. Verfahren nach einem der Ansprüche 1 bis 5,
**dadurch gekennzeichnet**,
daß die Dichte der Kettfäden (12) zwischen dem Innendurchmesser und dem Außendurchmesser zunehmend ist.

7. Verfahren nach einem der Ansprüche 1 bis 6,
**dadurch gekennzeichnet**,
daß die Nadelung mit einer flächenbezogenen Dichte von Nadelstichen durchgeführt wird, welche über die gesamte Fläche der Lagen des Gewebebandes im wesentlichen konstant ist.

8. Verfahren nach einem der Ansprüche 1 bis 7,
**dadurch gekennzeichnet**,
daß die Nadelung mit Hilfe einer Nadelanordnung (50) durchgeführt wird, welche einen Sektor abdeckt, der sich über die gesamte Breite des Gewebebandes erstreckt.

9. Verfahren nach einem der Ansprüche 1 bis 8,
**dadurch gekennzeichnet**,
daß die Nadelung über eine im wesentlichen konstante Tiefe durchgeführt wird.

10. Verfahren nach einem der Ansprüche 1 bis 9,
**dadurch gekennzeichnet**,
daß die Nadelung progressiv nach Maßgabe des flachen Windens des Gewebebandes durchgeführt wird.

11. Verfahren nach einem der Ansprüche 1 bis 9,
**dadurch gekennzeichnet**,
daß das Band aus spiralförmigem Gewebe um eine Achse herum gewunden wird, indem aufeinandergestapelte Lagen gebildet werden, welche im wesentlichen rechtwinklig zu dieser Achse sind.

12. Verfahren nach einem der Ansprücne 1 bis 10,
**dadurch gekennzeichnet**,
daß das Gewebeband um eine Achse herum gewunden wird, indem aufeinandergestapelte, kegelstumpfförmige Lagen gebildet werden.

13. Verfahren nach einem der Ansprüche 1 bis 12,
**dadurch gekennzeichnet**,
daß das Gewebeband um ein Rohr (42) herum gewunden wird.

14. Verfahren nach einem der Ansprüche 1 bis 13,
**dadurch gekennzeichnet**,
daß das Gewebeband auf einer Platte (20) gelagert ist, von wo es durch einen radialen Schlitz (24) hindurch gezogen wird.

15. Verfahren nach einem der Ansprüche 1 bis 13,
**dadurch gekennzeichnet**,
daß das Gewebeband (10) auf einem Dorn (70) gelagert ist, wo es unter Bildung einer Stapelung (73) von kegelstumpfförmigen, aufeinandergestapelten Schichten gewunden wird.

16. Verfahren nach Anspruch 15,
**dadurch gekennzeichnet**,
daß das Gewebeband von dem Dorn (70) nach Maßgabe des Windens des Gewebebands auf einem Drehtisch abgenommen wird, um einen Vorformling (60, Fig. 8) zu bilden, welcher aus kegelstumpfförmigen, aufeinandergestapelten Windungen besteht, wobei die Überführung des Gewebebandes durch tangentielle Berührung zwischen der Stapelung von kegelstumpfförmigen Schichten auf dem Dorn und dem Vorformling im Verlaufe der Bildung durchgeführt wird.

17. Verfahren nach einem der Ansprüche 1 bis 16,
**dadurch gekennzeichnet**,
daß das Gewebeband (10) flach gewunden und nach Maßgabe seines Windens stetig genadelt wird, derart, um eine Hülse zu bilden, und daß Vorformlinge, welche zu der Herstellung von ringförmigen Teilen bestimmt sind, aus der Hülse geschnitten werden.

18. Verwendung des Verfahrens nach einem der Ansprüche 1 bis 17 für die Herstellung von ringförmigen Vorformlingen, welche für die Herstellung von Bremsscheiben aus Verbundwerkstoff bestimmt sind.

## Claims

1. A method of making fiber preforms for manufacturing annular parts made of composite material, the method comprising winding superposed layers of a strip of spirally- or helically-shaped cloth having substantially helical warp yams and substantially radial weft yarns,
the method being characterised in that the mass per unit area of the warp of the helical cloth increases between its inside diameter and its outside diameter, and the layers of the strip of cloth are needled so as to be bonded together by fibers pulled from yarns of the cloth, the increase in mass per unit area of the warp at least approximately compensating, in terms of density per unit volume of the preform, the decrease in density of the weft between the inside diameter and the outside diameter.

2. A method according to claim 1, characterised in that the helical cloth (10) is made up at least in part of yams comprising parallel discontinuous fibers.

3. A method according to claim 2, characterised in that the helical cloth (10) is constituted at least in part by yams comprising parallel discontinuous fibers held together by a sacrificial covering yarn, and in that the covering yam is eliminated prior to needling.

4. A method according to claim 2, characterised in that the helical cloth (10) is constituted at least in part by yams comprising discontinuous fibers held together by a small amount of twisting.

5. A method according to any one of claims 1 to 4, characterised in that the size of the warp yams (12) increases between the inside diameter and the outside diameter.

6. A method according to any one of claims 1 to 5, characterised in that the density of the warp yams (12) increases between the inside diameter and the outside diameter.

7. A method according to any one of claims 1 to 6, characterised in that the needling is performed with a density of needle strokes per unit area that is substantially constant over the entire surface of the layers of the strip of cloth.

8. A method according to any one of claims 1 to 7, characterised in that the needling is performed by means of a set of needles (50) covering a sector extending over the entire width of the strip of cloth.

9. A method according to any one of claims 1 to 8, characterised in that the needling is performed to a substantially constant depth.

10. A method according to any one of claims 1 to 9, characterised in that the needling is performed progressively while the strip of cloth is being wound flat.

11. A method according to any one of claims 1 to 9, characterised in that the strip of helical cloth is wound around an axis, building up superposed layers that are substantially perpendicular to said axis.

12. A method according to any one of claims 1 to 10, characterised in that the strip of cloth is wound around an axis to form superposed layers that are frustoconical.

13. A method according to any one of claims 1 to 12, characterised in that the strip of cloth is wound around a tube (42).

14. A method according to any one of claims 1 to 13, characterised in that the strip of cloth is stored on a tray (20) from which it is pulled through a radial slot (24).

15. A method according to any one of claims 1 to 13, characterised in that the strip of cloth (10) is stored on a mandrel (70) on which it is wound to form a stack (73) of superposed frustoconical plies.

16. A method according to claim 15, characterised in that the strip of cloth is taken from the mandrel (70) as it is wound onto a turntable to form a preform (60, Figure 8) made up of superposed frustoconical turns, with the strip of cloth being transferred by tangential contact between the stack of frustoconical plies on the mandrel and the preform that is being built up.

17. A method according to any one of claims 1 to 16, characterised in that the strip of cloth (10) is wound flat and is needled continuously while it is being wound so as to form a tube, and the tube is sliced to provide preforms for manufacturing annular parts.

18. The use of a method according to any one of claims 1 to 17 for making annular preforms for use in the manufacture of composite material brake disks.
